# EUROPÄISCHE PATENTANMELDUNG

(11) **EP 1 607 565 A1**
(43) Veröffentlichungstag der Anmeldung: **21.12.2005**
(21) Anmeldenummer: 05010639.2
(22) Anmeldetag: 17.05.2005
(51) Int. Cl.: E05G 1/08, E05G 1/00

(54) **Mobiles Schliessfach**

(30) Priorität: 14.06.2004 DE 102004028732; 19.07.2004 DE 102004034901; 10.01.2005 DE 202005000282 U
(71) Anmelder: Ottenthal, Thomas, 86169 Augsburg (DE); Braun, Michael, 86356 Neusäss (DE)
(72) Erfinder: Ottenthal, Thomas, 86169 Augsburg (DE); Braun, Michael, 86356 Neusäss (DE)
(74) Vertreter: Asmussen, Arnold

(57) **Zusammenfassung**

Die vorliegende Erfindung betrifft ein Schließfachsystem zur vorübergehenden Aufnahme von Wertgegenständen mit einem Gehäuse und mindestens einer verschließbaren Zugriffsöffnung bzw. mindestens einem Schließfach. Das Schließfachsystem ist auf einem Fahrzeug anordenbar und kann von einer Transportposition in eine Betriebsposition überführt werden. Gemäß einer weiteren Ausführungsform der Erfindung ist das Schließfachsystem mit Rädern bzw. Rollen versehen, die derart beschaffen sind, dass sie in einer Transportposition ein Transportieren des Schließfachsystems (10) gewährleisten und in einer Betriebsposition ein unbefugtes Transportieren des Schließfachsystem (10) verhindern. Die Erfindung betrifft ferner ein Fahrzeug mit einem oder mehrerer derartiger Schließfachsysteme.

## Beschreibung

Die vorliegende Erfindung betrifft ein mobiles Schließfach bzw. Schließfachsystem, insbesondere zur vorübergehenden Aufnahme von Wertgegenständen, sowie ein Fahrzeug mit einem derartigen Schließfachsystem.

In der nachveröffentlichten DE 20 2004 005 067 U1 ist eine transportable Schließfachkombination, die auf einem LKW-Anhänger, insbesondere Sattelauflieger, angeordnet ist, offenbart. Auf dem LKW-Anhänger sind, verlaufend auf seiner Längsachse, mindestens zwei mit ihren Rückwänden aneinander stehende innere Schließfachwände angeordnet, und an den längsseitigen Außenwänden des LKW-Anhängers sind weitere äußere Schließfachwände so angeordnet, dass sich die Türseiten der inneren Schließfachwände und die Türseiten der äußeren Schließfachwände gegenüber stehen.

Die US 3 837 300 betrifft einen für die Verwendung in Lastwagen angeordneten Behälter zur Aufnahme eines Wagens. Der Behälter weist ein Gehäuse mit einer Hintertüre auf, durch die der Wagen in den Behälter eingeschoben und daraus entfernt werden kann. Der Wagen hat mehrere in Reihen angeordnete Aufnahmeabteile, und die Vorderseite des Gehäuses weist mehrere Reihen von Türen auf, die sequentiell auf die Aufnahmeabteile ausgerichtet werden können.

Schließfächer sind seit langem bekannt und üblicherweise vor allem auf Bahnhöfen, an Flughäfen und ähnlichen öffentlichen Einrichtungen dauerhaft eingerichtet, so dass Wertgegenstände in den Schließfächern deponiert werden können. Diese Schließfächer erfüllen zwar an ihrem Aufstellungsort ihren Zweck, da jedoch zunehmend mehr Wertgegenstände, wie z. B. Mobiltelefone, mobile Musikabspielgeräte usw. mitgenommen werden, besteht ein Bedarf, auch diese Gegenstände z.B. bei Großveranstaltungen sicher verstauen zu können. Insbesondere bei Veranstaltungen, die nicht an einem üblicherweise dafür vorgesehenen Ort stattfinden, besteht ein erhöhter Bedarf, Wertgegenstände vorübergehend deponieren zu können.

Die Aufgabe der vorliegenden Erfindung besteht darin, diesen Bedarf zu decken und ein mobiles Schließfachsystem sowie ein Fahrzeug mit einem Schließfachsystem bereitzustellen. Diese Aufgabe wird mit den Merkmalen der Patentansprüche gelöst.

Die Erfindung geht dabei von den Grundgedanken aus, ein Schließfachsystem insbesondere zur temporären Aufnahme von Wertgegenständen mit einem Gehäuse und mindestens einer verschließbaren Zugriffsöffnung bereitzustellen. Das Schließfachsystem kann auf einem Fahrzeug, insbesondere einem PKW-Anhänger oder auf der Lade- bzw. Aufbaufläche eines Transporters oder Lastwagens, angeordnet werden und/oder kann selbst beispielsweise durch Rollen oder Räder mobil ausgebildet sein. Das Schließfachsystem ist derart ausgebildet, dass es von einer Transportposition, in der das Schließfachsystem ohne weiteres transportierbar ist, in eine Betriebsposition, in der das Schließfachsystem für den Zugriff zu den einzelnen Schließfächern geeignet und gegen unbefugtes entfernen gesichert ist, und umgekehrt überführbar ist.

Eine bevorzugte Ausführungsform des erfindungsgemäßen Schließfachsystems weist zur Überführung zwischen der Transport- und Betriebsposition einen fahrbaren Unterbau auf. Dieser Unterbau hat vorzugsweise mehrere Rollen bzw. Räder, die in der Transportposition einen problemlosen Transport des Schließfachsystems gewährleisten. In der Betriebsposition des Schließfachsystems sind die Rollen in einem Zustand, z.B. in einer Position, die ein Bewegen des Schießfachsystems unmöglich macht oder zumindest erheblich erschwert. Hierzu können die Rollen beispielsweise mittels eines Hubmechanismus (mechanisch, elektrisch, hydraulisch, pneumatisch, etc.) vom Untergrund gehoben werden. Als Alternative oder zusätzlich dazu kann auch das Gehäuse des Schließfachsystems angehoben werden, so dass die Rollen keinen Kontakt mehr zum Untergrund haben, wozu beispielsweise ausfahrbare Stützen vorgesehen sein können. Außerdem können auch die Rollen selbst arretierbar und gegen unbefugten Zugriff geschützt sein, so dass ein Entfernen des Schließfachsystem verhindert wird.

Gemäß dieser Ausführungsform der Erfindung ist das Schließfachsystem also selbst mobil und von einer Transportposition in eine Betriebsposition überführbar. Die bei dieser Ausführungsform vorgesehenen Rollen bzw. Räder sind ausklappbar, um das Schließfachsystem von der Transportposition in die Betriebsposition zu überführen und umgekehrt. In der Betriebsposition sind die Rollen bzw. Räder z.B. eingeklappt, blockiert oder auf sonstige Weise vorübergehend funktionsunfähig gemacht, so dass das Schließfachsystem nicht mobil ist. Zweckmäßiger Weise ist die Betriebsposition mittels einer Verriegelungs- oder Schließeinrichtung gegen böswilliges Überführen des Schließfachsystems von der Betriebsposition in die Transportposition gesichert, so dass es nicht durch Unbefugte von seinem Standort entfernt werden kann.

Eine weitere Ausführungsform des erfindungsgemäßen Schließfachsystems, das insbesondere zur temporären Aufnahme von Wertgegenständen dient, weist ein Gehäuse und mindestens eine verschließbare Zugriffsöffnung auf. Das Schließfachsystem ist als Fahrzeug, insbesondere als PKW-Anhänger, derart ausgebildet, dass es auf dem Fahrzeug von einer Transportposition, in der das Schließfachsystem transportsicher auf dem Fahrzeug angeordnet ist, in eine Betriebsposition, in der das Schließfachsystem für den Zugriff zu den einzelnen Schließfächern zugänglich ist, und umgekehrt überführbar ist. In der Betriebsposition ist ein unbefugtes Transportieren des PKW-Anhängers verhindert, indem zum Beispiel der Anhänger gegen Entfernen durch Anhängen an ein anderes Fahrzeug abgesichert ist. Dies kann beispielsweise durch geeignete Absperrmittel bzw. Verankerungsmaßnahmen realisiert sein.

Eine Kombination der vorstehend erwähnten Ausführungsformen ist insbesondere dahingehend vorteilhaft, dass das Schließfachsystem auf dem Fahrzeug über größere Entfernungen transportiert werden kann und anschließend im Bereich des Einsatzortes mittels der eigenen Rollen oder Räder weiter transportierbar ist, um es zum eigentlichen Einsatzort zu bringen. Mit anderen Worten weist ein solches Schließfachsystem zwei Transport- bzw. Betriebspositionen auf. Eine erste Transportposition auf dem Fahrzeug und eine zweite Transportposition zum Transport des Schließfachsystems an seinen Bestimmungsort. Je nach Art der Verwendung kann ein derartiges Schließfachsystem auf dem Fahrzeug in eine erste Betriebsposition überführt werden, z.B. wenn das Schließfachsystem mit dem Fahrzeug direkt zum Einsatzort gebracht werden kann. Ist dies nicht möglich oder gewünscht, kann das Schließfachsystem nach dem Transport zum gewünschten Einsatzort in eine zweite Betriebsposition überführt werden, indem beispielsweise die Rollen bzw. Räder eingeklappt und verriegelt werden.

Vorzugsweise weist das Schließfachsystem mehrere verschließbare Zugriffsöffnungen bzw. Schließfächer auf, die beispielsweise mittels einer Schließanlage verriegelbar und durch Münzeinwurf bzw. Geldzahlung aktivierbar sind. Dabei kann sowohl eine Version, bei der der entsprechende Geldbetrag lediglich als Pfand vorübergehend einbehalten wird, als auch eine für den Benutzer direkt kostenpflichtige Version zum Einsatz kommen. Als Schließanlage sind beispielsweise mechanische oder elektronische Schlösser bzw. Schließanlagen realisierbar.

Gemäß einer Ausführungsform der Erfindung ist das Gehäuse, das das eine oder die mehreren Schließfächer aufweist, auf einem Anhänger, insbesondere einem PKW-Anhänger, fest montiert (z.B. verschraubt), wobei der Anhänger gegen unbefugtes Entfernen, Bewegen etc. gesichert ist. Diese Sicherung kann beispielsweise in Form eines Anhängschutzes an der Deichsel des Anhängers, einer Bremsverriegelung der Bremse des Anhängers und/oder einer gegen unbefugten Zugriff gesicherten Abstützung des Anhängers erfolgen. Anstelle der festen Montage des Gehäuses auf dem Anhänger können diese auch mittels eines Schnellverschlusses, z.B. eines Rastsystems oder Bajonettverschlusses, am Anhänger montiert sein.

Dient als Fahrzeug zur Montage des Gehäuses für die Schließfächer z.B. ein PKW-Anhänger, kann eine Überführung zwischen der Transportposition und der Betriebsposition beispielsweise dadurch erfolgen, dass eine Abdeckplane für das Gehäuse vorgesehen ist, die in der Betriebsposition als Überdachung des Schließfachsystems selbst und dessen näherer Umgebung dient. Diese kann insbesondere auch den Anhänger gegen unbefugtes Entfernen absichern, beispielsweise durch geeignete Absperrmittel bzw. Verankerungsmaßnahmen. Alternativ dazu kann das erfindungsgemäße Schließfachsystem auch als Aufbau auf einen Transporter oder Lastwagen ausgebildet sein.

Gemäß einer weiteren vorteilhaften Ausführungsform des erfindungsgemäßen Schließfachsystems ist das Gehäuse mittels einer Schienenanordnung auf dem Fahrzeug montiert, so dass es zwischen der Transportposition und der Betriebsposition verschiebbar anbringbar ist. Dies ist insbesondere vorteilhaft, wenn auf dem Fahrzeug mehrere Schließfachsysteme angeordnet sind und diese zum Transport in relativ enger Anordnung auf dem Fahrzeug zusammengeschoben sind, während sie in der Betriebsposition auseinandergeschoben werden können, um so einen Zutritt bzw. Zugriff zu sämtlichen Schließfächern des Schließfachsystems zu gewährleisten. Beispielsweise kann das Schienensystem so angeordnet sein, dass ein Verschieben quer und/oder längs zur Fahrtrichtung des Fahrzeugs möglich ist. Außerdem oder als Alternative kann auch eine Drehvorrichtung, z.B. in Form einer Platte, zum Einsatz kommen, um ein Drehen des Schließfachsystems auf dem Fahrzeug zu erlauben.

Alternativ dazu kann die Schienenanordnung selbstverständlich auch am Fahrzeug bzw. am Fahrzeug und am Schließfachsystem vorgesehen sein, wozu das Schließfachsystem selbst ausgebildet sein muss, um in das Schienensystem eingreifen zu können.

Gemäß einer weiteren vorteilhaften Ausgestaltung des erfmdungsgemäßen Schließfachsystems kann eine Hubeinrichtung am Schließfachsystem vorgesehen sein, mit der das Schließfachsystem am Fahrzeug absenk- und anhebbar angeordnet ist. Dies ist insbesondere für Ausführungsformen von Vorteil, bei denen das Schließfachsystem am gewünschten Aufstellungsort in der Betriebsposition vom Fahrzeug getrennt werden soll. Allerdings kann eine derartige Hubeinrichtung auch von Vorteil sein, um einen leichteren Zutritt bzw. Zugriff zu den Schließfächern des Schließfachsystems zu gewährleisten, indem dieses mittels der Hubeinrichtung auf den Boden absenkbar ist. Die Hubeinrichtung kann auch am Fahrzeug vorgesehen sein, wobei das Schließfachsystem dann zur Anlenkung der Hubeinrichtung ausgerüstet sein sollte.

Eine vorteilhafte Ausführungsform des erfindungsgemäßen Schließfachsystems kann sowohl eine Schienenanordnung und/oder Drehvorrichtung zur verschieb- und drehbaren Anordnung des Systems auf einem Fahrzeug als auch eine Hubeinrichtung aufweisen, mit der das Schließfachsystem zumindest teilweise vom Fahrzeug absenkbar ist, so dass eine einfache und variable Möglichkeit besteht, das Schließfachsystem von der Transportposition in die Betriebsposition zu überführen und umgekehrt.

Das Schließfachsystem selbst weist vorzugsweise ein kastenförmiges Gehäuse (z.B. quaderförmig, zylindrisch, tonnenförmig, oder sonstige durch kreissegmentartige oder polygonale Grundflächen gebildete dreidimensionale Formen) auf. Das Gehäuse verfügt vorzugsweise über mehrere, an mindestens einer Seite des Gehäuses vorgesehene Zugriffsöffnungen, um die einzelnen Schließfächer bereitzustellen. Vorzugsweise sind sowohl auf der Gehäusevorderseite als auch auf der Gehäusehinterseite Zugriffsöffnungen vorgesehen, so dass in der Betriebsposition möglichst guter Zugriff gewährleistet ist und gleichzeitig das Schließfachsystem in eine Transportposition überführbar ist, in der es ein möglichst geringes Volumen einnimmt. Als Material für die Schließfächer, insbesondere das Gehäuse, ist Metall (z.B. lackierter oder verzinkter Stahl, Aluminium, Edelstahl), Kunststoff und/oder Holz bevorzugt.

Die vorliegende Erfindung betrifft darüber hinaus ein Fahrzeug mit einem oder mehrerer der vorstehend beschriebenen Schließfachsysteme.

Nachfolgend werden bevorzugte Ausführungsformen des erfindungsgemäßen Schließfachsystems unter Bezugnahme auf die Zeichnungen beispielhaft beschrieben.

Es zeigen:
- Figur 1: eine Draufsicht auf eine erste Ausführungsform mehrerer auf einem Anhänger angeordneter erfindungsgemäßer Schließfachsysteme, die sich teilweise in der Transportposition, teilweise in der Betriebsposition befinden;
- Figur 2: eine Draufsicht auf eine zweite Ausführungsform mehrerer auf einem Anhänger angeordneter erfindungsgemäßer Schließfachsysteme, die sich teilweise in der Transportposition, teilweise in der Betriebsposition befinden;
- Figur 3: eine perspektivische Ansicht einer dritten Ausführungsform eines erfindungsgemäßen Schließfachsystems auf einem Anhänger;
- Figur 4: eine perspektivische Ansicht einer vierten Ausführungsform eines erfindungsgemäßen Schließfachsystems mit integrierten Rollen;
- Figur 5: eine perspektivische Ansicht einer weiteren Ausführungsform eines erfindungsgemäßen Schließfachsystems ähnlich Figur 4 mit einklappbaren Rollen bzw. Rädern;
- Figur 6: eine perspektivische Detailansicht einer Hubmechanik des Schließfachsystems gemäß Figur 5;
- Figur 7: eine perspektivische Detailansicht eines fahrbaren Unterbaus für das Schließfachsystem gemäß Figuren 5 und 6;
- Figur 8: eine perspektivische Ansicht einer weiteren Ausführungsform eines erfindungsgemäßen Schließfachsystems ähnlich Figur 5 mit ausfahrbaren Stützen; und

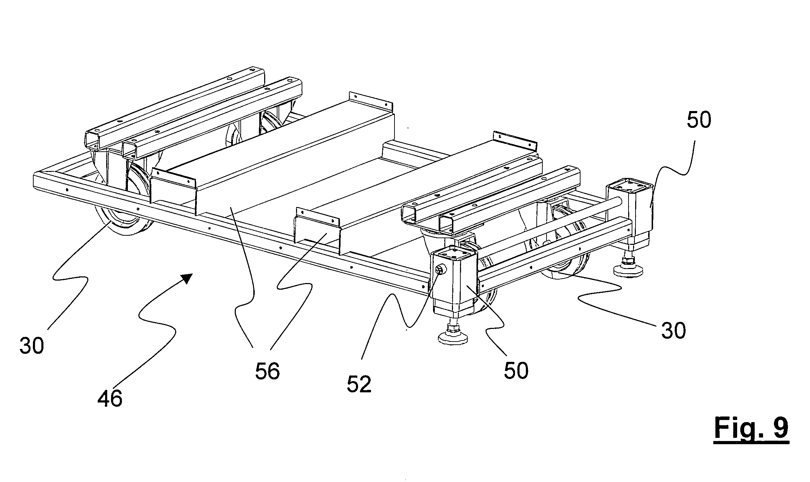

- Figur 9: eine perspektivische Detailansicht eines fahrbaren Unterbaus für das Schließfachsystem gemäß Figur 8.

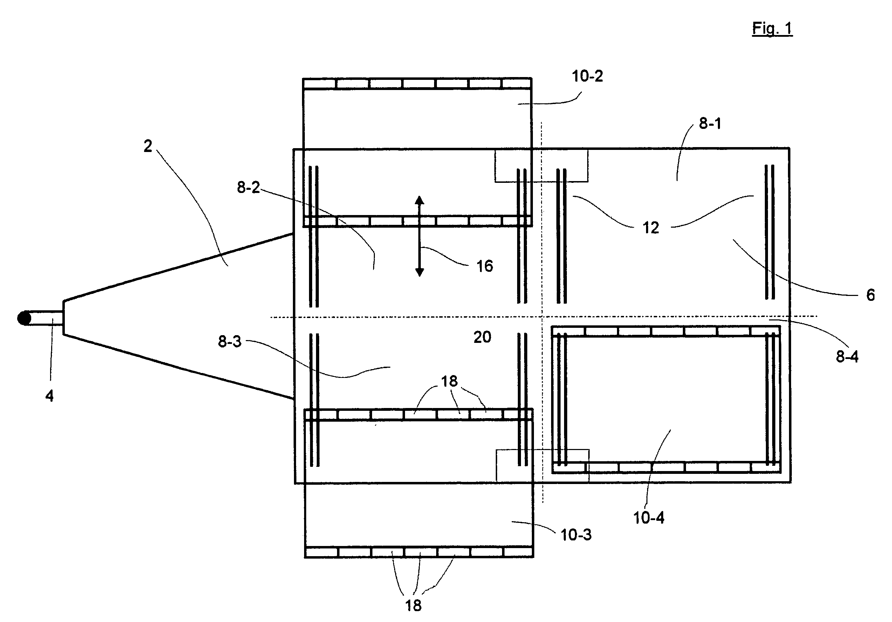

In Figur 1 ist ein erfindungsgemäßes Fahrzeug in Form eines PKW-Anhängers 2 schematisch in Draufsicht dargestellt. Der Anhänger weist ein (nicht näher gezeigtes) Fahrgestell mit einer Deichsel 4 und einer Lade- bzw. Aufbaufläche 6 auf. Auf der Aufbaufläche 6 sind in der in Figur 1 dargestellten Ausführungsform vier Aufnahmebereiche
8-1, 8-2, 8-3 und 8-4 zur Aufnahme erfindungsgemäßer Schließfachsysteme 10-2, 10-3 und 10-4 vorgesehen. Der Übersichtlichkeit halber ist das Schließfachsystem 10-1 in Figur 1 nicht dargestellt, so dass der Blick auf die Lade- und Aufbaufläche 6 des Anhängers 2 frei ist.

Das erfindungsgemäße Schließfachsystem 10 ist in der Figur 1 dargestellten Ausführungsform mittels einer Schieneneinrichtung 12 an dem Anhänger 2 derart montiert, dass die einzelnen Schließfächer in einer Richtung quer zur Fahrtrichtung 14 des Anhängers zwischen der Transportposition und der Betriebsposition verschiebbar sind. Dies ist durch den Pfeil 16 in Figur 1 angedeutet. In der in Figur 1 dargestellten Ausführungsform ist das Schließfachsystem 10-4 in der Transportposition gezeigt, in der es vollständig auf der Ladefläche 6 des Anhängers 2 angeordnet ist. Die Schließfachsysteme 10-2 und 10-3 sind in ihrer Betriebsposition angeordnet. Durch die verschiebbare Anordnung der Schließfachsysteme 10 auf dem Anhänger 2 ist ein Zugang zu den einzelnen Schließfächern bzw. verschließbaren Zugriffsöffnungen 18 eines jedes Schließfachsystems sowohl von einem Bereich außerhalb des Anhängers 2 als auch von einem innen bereitgestellten Zutrittsbereich 20 möglich. Dadurch lassen sich auf geringem Raum viele Schließfächer realisieren, so dass in der Transportposition der Anhänger 2 eine relativ dicht gepackte Anordnung von Schließfachsystemen 10 aufweist, während in der Betriebsposition die Anordnung der einzelnen Schließfachsysteme 10 großzügiger gestaltet werden kann, um einen Zugang zu allen Schließfächern 18 des Systems zu gewährleisten.

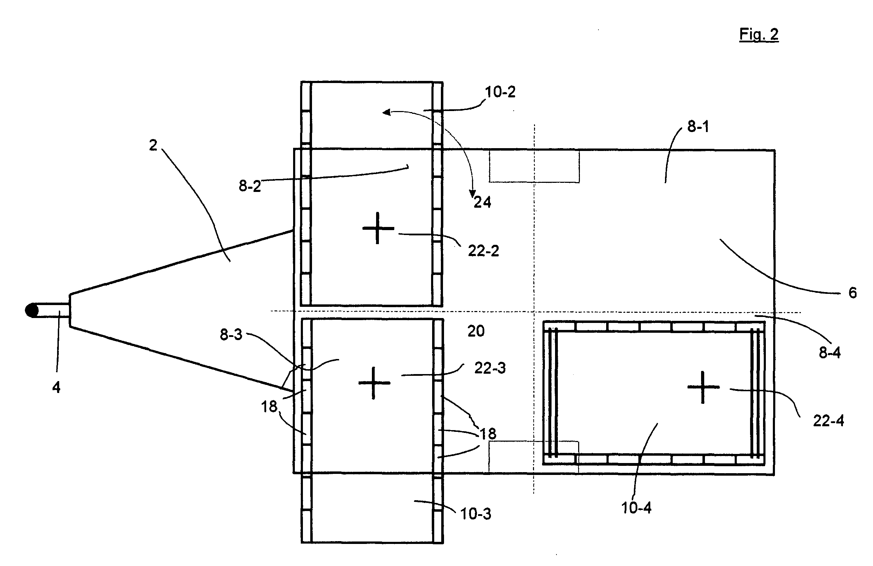

Bei der in Figur 2 gezeigten Ausführungsform ist das erfindungsgemäße Schließfachsystem mittels einer Drehvorrichtung 22 von der Transportposition in die Betriebsposition überführbar, wie dies im Fall des Schließfachsystems 10-2 durch den Pfeil 24 schematisch gezeigt ist. Vorteilhafter Weise sind die Drehpunkte der Drehvorrichtung 22 derart gewählt, dass in der Transportposition die Schließfachsysteme eng auf dem Fahrzeug angeordnet sind, während sie in der Betriebsposition einen guten Zugang zu den einzelnen Schließfächern ermöglichen.

Eine Kombination der Ausführungsformen gemäß den Figuren 1 und 2 ist vorteilhaft, um eine noch bessere Flexibilität der Anordnungsmöglichkeiten der einzelnen Schließfachsysteme auf dem Fahrzeug zu gewährleisten. Bei einer solchen Kombination sind also sowohl Schieneneinrichtung 12 als auch Drehvorrichtungen 22 vorgesehen, die eine besonders vorteilhafte Variabilität des erfindungsgemäßen Schließfachsystems sicher stellen.

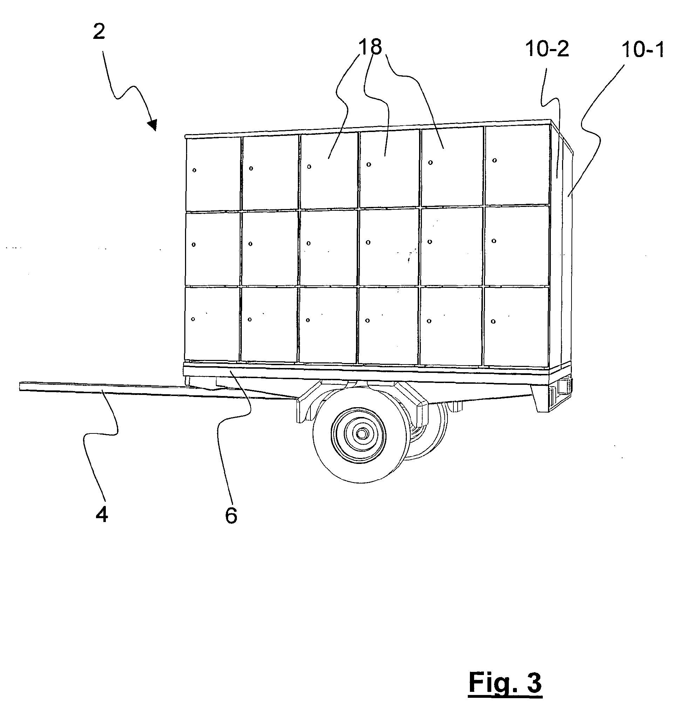

In Figur 3 ist eine weitere Ausführungsform des erfindungsgemäßen Schließfachsystems in perspektivischer Darstellung gezeigt. Gemäß dieser Ausführungsform sind die einzelnen Schließfächer 18 in Form zweier Einheiten bzw. Module 10-1, 10-2 auf der Ladefläche 6 des Anhängers 2 fest oder beispielsweise mittels eines Schnellverschlusses angeordnet. Die Deichsel 4 des Anhängers 2 ist vorzugsweise gegen unbefugtes Anhängen gesichert. Alternativ oder zusätzlich können (nicht dargestellte) Stützen am Anhänger vorgesehen sein, die eine unbefugtes Bewegen des Schließfachsystems verhindern. Außerdem oder als Alternative kann auch die Bremse des Anhängers gegen unbefugte Manipulation gesichert sein. Jede dieser Optionen stellt für sich und in Kombination eine Möglichkeit dar, das erfindungsgemäße Schließfachsystem von der Transport- in die Betriebsposition zu überführen und umgekehrt.

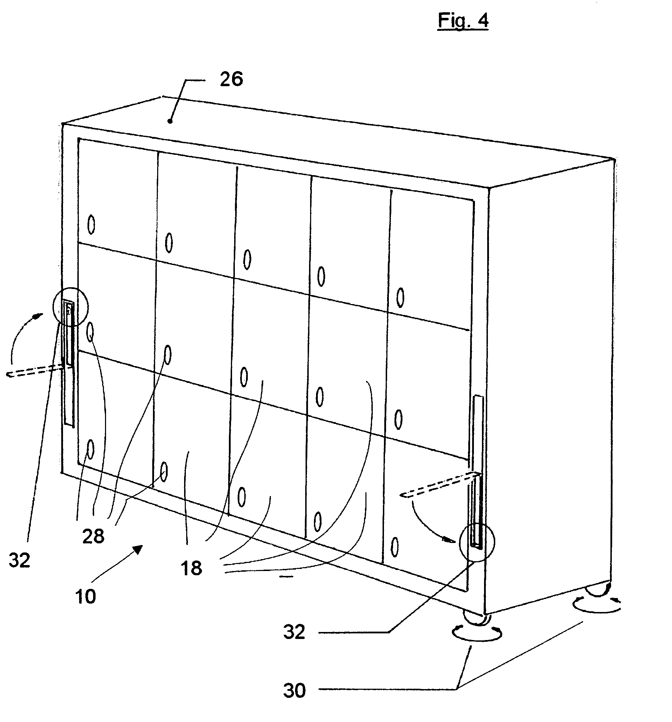

Die in Figur 4 gezeigte Ausführungsform des erfindungsgemäßen Schließfachsystems 10 ist entweder zur Anwendung auf einem Fahrzeug gemäß der in den Figuren 1 bis 3 beschriebenen Ausführungsformen geeignet oder kann insbesondere auch unabhängig davon ohne Fahrzeug zum Einsatz kommen.

Wie in Figur 4 gezeigt, weist das Schließfachsystem 10 ein Gehäuse 26 mit mehreren Schließfächern 18 auf, die jeweils über ein schematisch gezeigtes Schloss 28 verschließbar sind. Ferner sind am Gehäuse 26 Rollen bzw. Räder 30 vorgesehen, die einen einfachen Transport des Schließfachsystems 10 ermöglichen. In Figur 4 ist das Schließfachsystem 10 in seiner Transportposition gezeigt, in der die Räder 30 aus dem Gehäuse 26 ausgefahren sind. Zur Überführung des Schließfachsystems 10 in die Betriebsposition sind die Räder 30 beispielsweise im oder unter dem Gehäuse 26 versenkbar. Dazu dient in der dargestellten Ausführungsform ein Hebelmechanismus 32. Die Betriebsposition, in der die Räder eingezogen sind, ist vorzugsweise mittels einer Verriegelungs- bzw. Schließeinrichtung (nicht gezeigt) gegen unbefugte Manipulation gesichert. Auf diese Weise kann das erfindungsgemäße Schließfachsystem auf einfache Weise zu einem gewünschten Einsatzort transportiert und dort sicher aufgestellt werden.

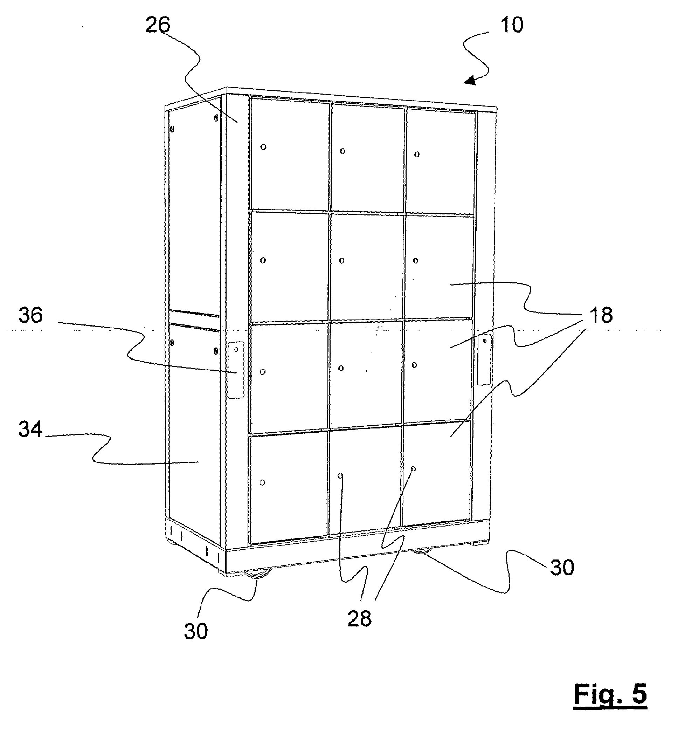

In den Figuren 5 bis 7 ist eine weitere Ausführungsform eines erfmdungsgemäßen Schließfachsystems 10 gezeigt, das prinzipiell dem System gemäß Figur 4 ähnlich ist. Das in Figur 5 gezeigte Schließfachsystem 10 weist ein Gehäuse 26 auf, das neben den einzelnen Schließfächern 18 mindestens ein weiteres abschließbares Fach 34 aufweist.

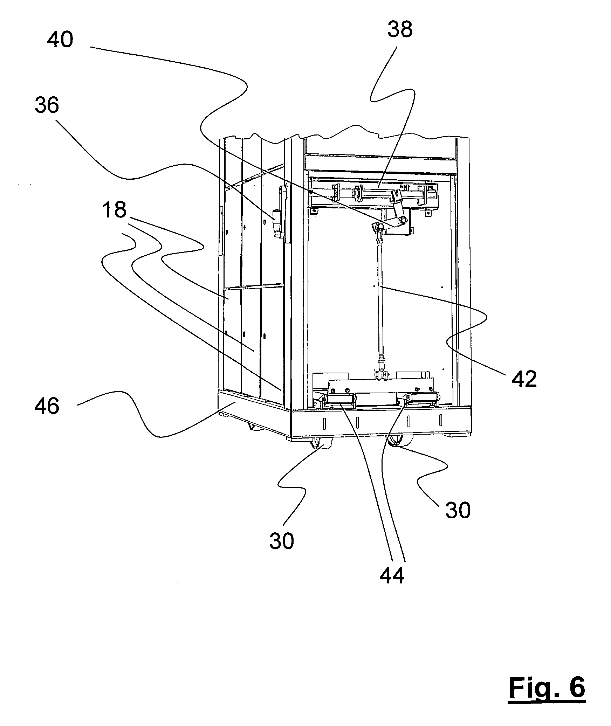

In diesem Fach 34 ist gemäß dieser Ausführungsform ein Teil des Hubmechanismus für die Rollen 30 untergebracht, wie in Figur 6 näher gezeigt.

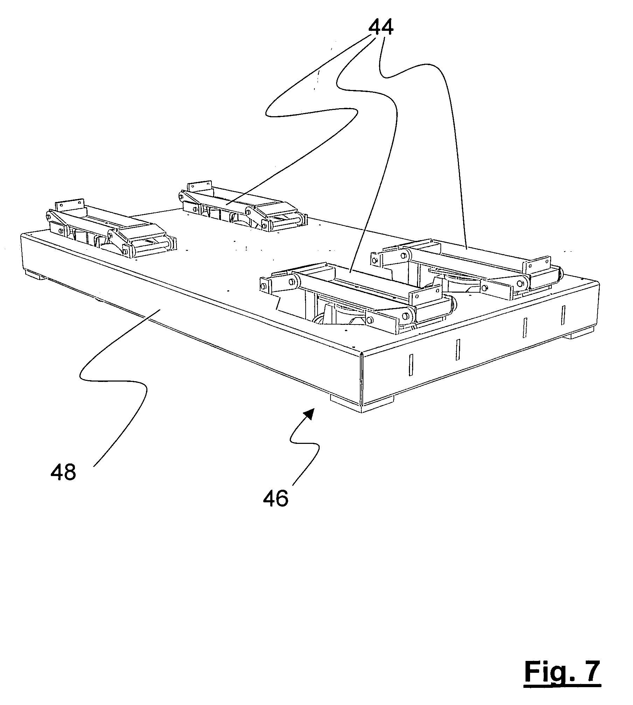

In Figur 6 ist das Schließfachsystem ohne die abschließbare Abdeckung für das Fach 34 gezeigt. Wie in Figur 6 dargestellt, weist der Hubmechanismus insbesondere eine Betätigungskurbel 36 auf, mit der der Hubmechanismus zur Überführung des Schließsystems von der Transport- in die Betriebsposition und umgekehrt betätigbar ist. Unter der Abdeckung des Faches 34 verbirgt sich ein über eine Gewindespindel 38 angetriebener Kniehebel 40, der wiederum mit einer Zug-/ Schubstange 42 gekoppelt ist. Die Zug-/ Schubstange 42 ist mit einem in Figur 7 näher gezeigten Hebelmechanismus 44 verbunden, der an einem Unterbau 46 angelenkt ist. Dieser Hebelmechanismus trägt die Rollen 30.

Als Alternative zu dem vorstehend beschriebenen Hubmechanismus oder zusätzlich dazu ist es auch möglich, die Rollen 30 in einen Zustand, z.B. in eine Position, zu versetzende, in der ein Bewegen des Schießfachsystems unmöglich ist oder zumindest erheblich erschwert wird. Hierzu können die Rollen beispielsweise mittels einer Bremse blockiert werden. Die Betätigungseinrichtung für die Bremse ist in diesem Fall beispielsweise unter einer absperrbaren Abdeckung vorgesehen. Dies kann z.B. durch eine klappbare Schürze 48 (vgl. Figur 7) realisiert werden.

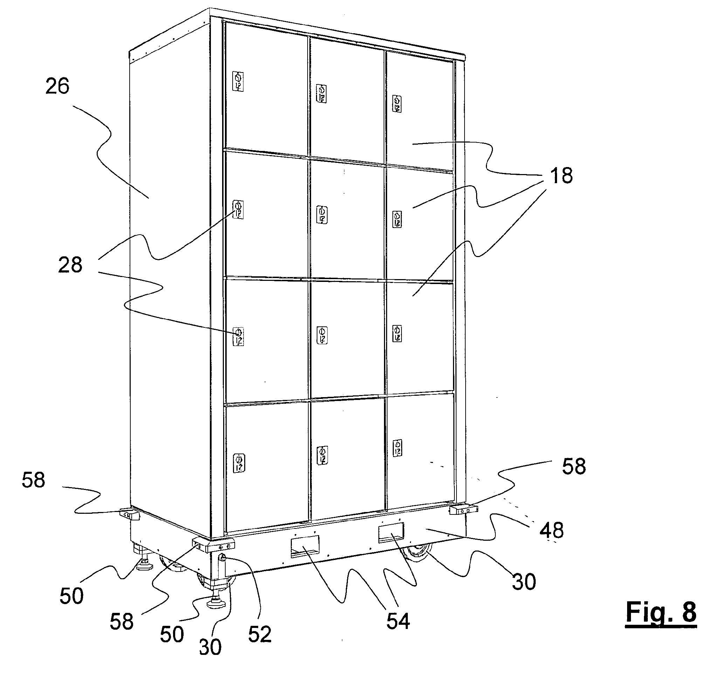

Die in Figur 8 dargestellte Ausführungsform des erfindungsgemäßen Schließfachsystems weist aus- und einfahrbare Stützen 50 auf, mit denen die Rollen bzw. Räder 30 zumindest teilweise vom Untergrund abgehoben werden können, um ein unbefugtes Bewegen des Schließfachsystems zu unterbinden. Vorteilhaft ist es, mindestens zwei solcher Stützen 50 an einer Seite des Gehäuses 26, insbesondere im Eckbereich, vorzusehen. Es können jedoch auch noch mehr solcher Stützen, z.B. in jedem Eckbereich des Gehäuses 26, vorgesehen sein. Damit kann das gesamte Schließfachsystem vom Untergrund abgehoben werden. Die Stützen 50 sind vorzugsweise mittels eines Spezialschlüssels betätigbar, der in ein entsprechendes Schloss 52 einsteckbar ist. Die Stützen 50 können mit dem Schlüssel ein- und ausgefahren werden.

Es kann ferner bevorzugt sein, die Schürze 48 mit zwei jeweils gegenüberliegenden Öffnungen 54 zu versehen, in die ein Gabelstapler eingreifen kann, um das Schließfachsystem beispielsweise auf einen Anhänger oder Lastwagen zu heben. Hierzu weist der Unterbau 46 vorzugsweise eine Aufnahme- und Tragkonstruktion 56 auf, an der das Schließfachsystem von der Gabel des Gabelstaplers angegriffen werden kann.

Ferner ist es vorteilhaft, am Schließfachsystem beispielsweise im Bereich der Ecken einen Stoßschutz 58 in Form von Gummipuffern vorzusehen, um Beschädigungen während des Transportes des Schließfachsystems zu minimieren.

Das erfindungsgemäße Schließfachsystem ist insbesondere bei Großveranstaltungen, wie Konzerten, Volksfesten, Sportveranstaltungen, an Badeseen und ähnlichem auf einfache Weise einsetzbar und gewährleistet einen sicheren Verschluss von Wertgegenständen. Nachdem die Veranstaltung beendet ist kann das Fahrzeug mit den Schließfachsystemen ohne weiteres abtransportiert werden und an dem nächsten Veranstaltungsort bereitgestellt werden.

## Patentansprüche

1. Schließfachsystem zur Aufnahme von Wertgegenständen mit einem Gehäuse und mindestens einer verschließbaren Zugriffsöffnung (18), wobei das Schließfachsystem (10) von einer Transportposition in eine Betriebsposition und umgekehrt überführbar ist.

2. Schließfachsystem nach Anspruch 1, das mittels einer Schienenanordnung (12) zwischen den beiden Positionen verschiebbar ist und/oder mittels einer Hubeinrichtung am Fahrzeug (2) absenkbar und anhebbar angeordnet ist und/oder mittels einer Drehvorrichtung (22) zwischen den beiden Positionen bewegbar ist.

3. Schließfachsystem nach Anspruch 1 oder 2, wobei das Gehäuse kastenartig ausgebildet ist und mehrere Zugriffsöffnungen (18) aufweist, wobei vorzugsweise sowohl auf einer Gehäusevorderseite als auch auf einer Gehäusehinterseite Zugriffsöffnungen (18) vorgesehen sind, wobei ein Zugriff auf die an der Gehäusehinterseite vorgesehenen Zugriffsöffnungen (18) nur in der Betriebsposition möglich ist.

4. Schließfachsystem nach einem der Ansprüche 1 bis 3, wobei die mindestens eine Zugriffsöffnung (18) durch eine Schließanlage, die durch Münzeinwurf bzw. Geldzahlung aktivierbar ist, abschließbar ist.

5. Schließfachsystem nach einem der Ansprüche 1 bis 4, das auf einem Anhänger, insbesondere PKW-Anhänger, Transporter- oder Lastwagenaufbau oder in Containerform anordenbar ist.

6. Schließfachsystem nach einem der Ansprüche 1 bis 5 mit Rädern (30), die derart beschaffen sind, dass sie in der Transportposition ein Transportieren des Schließfachsystems (10) gewährleisten und in der Betriebsposition ein unbefugtes Transportieren des Schließfachsystem (10) verhindern.

7. Schließfachsystem nach Anspruch 6, wobei die Räder (30) vom Untergrund abhebbar und/oder blockierbar sind und/oder das Gehäuse des Schließfachsystems (10) derart anhebbar ist, dass die Räder vom Untergrund getrennt werden können, und/oder eine Bremse vorgesehen ist.

8. Schließfachsystem nach Anspruch 6 oder 7, wobei die Räder oder das Gehäuse mittels eines Hebelmechanismus (32) oder eines Hubmechanismus von der Transport- in die Betriebsposition überführbar sind und umgekehrt.

9. Schließfachsystem nach Anspruch 8, wobei der Hebel- bzw. Hubmechanismus verriegelbar und/oder verschließbar ist.

10. Schließfachsystem nach Anspruch 8 oder 9, wobei der Hubmechanismus eine Kurbel (36) zum Antreiben einer Gewindespindel (38), einen Kniehebel (40), der mit der Gewindespindel (38) und einer Zug-/ Schubstange (42) gekoppelt ist, und einen Hebelmechanismus (44) aufweist, wobei die Rollen (30) am Hebelmechanismus (44) angeordnet sind.

11. Schließfachsystem nach Anspruch 7, wobei die Räder (30) blockierbar sind und eine Betätigungseinrichtung für die Blockierung hinter einer verriegelbaren Schürze (48) des Schließfachsystems (10) angeordnet ist.

12. Schließfachsystem nach Anspruch 7, wobei die Bremse am Gehäuse vorgesehen ist und gegen den Untergrund wirkt.

13. Fahrzeug mit einer Lade- oder Aufbaufläche (6) und mindestens einem Schließfachsystem (10) nach einem der Ansprüche 1 bis 12 zur Aufnahme von Wertgegenständen.

14. Fahrzeug nach Anspruch 13, wobei auf dem Fahrzeug (2) mehrere Schließfachsysteme (10-1, 10-2, 10-3, 10-4) angeordnet sind, die mittels einer Schienenanordnung (12) so verschiebbar sind, dass zumindest teilweise ein Zutritt zwischen benachbarte Schließfachsysteme möglich ist.

15. Fahrzeug nach Anspruch 13 oder 14, wobei mehrere Schließfachsysteme (10-1, 10-2, 10-3, 10-4) benachbart zueinander auf dem Fahrzeug (2) vorgesehen sind und über einen Schienen-Hebe-Mechanismus verfügen, so dass am Fahrzeugrand angeordnete Schließfachsysteme absenkbar und anhebbar sind und im Zentrum angeordneten Schließfachsystemen derart verschiebbar sind, dass ein Zutritt und Zugriff auf alle Schließfachsysteme möglich ist.
